# EUROPEAN PATENT SPECIFICATION

(11) **EP 3 243 648 B1**
(45) Date of publication and mention of the grant of the patent: **25.03.2020**
(21) Application number: 17000781.9
(22) Date of filing: 08.05.2017
(51) Int. Cl.: B32B 5/02, B32B 5/18, B32B 5/24, B32B 7/12, B32B 27/36, B32B 38/00, B32B 1/02, B32B 3/02, B32B 3/06, B32B 3/26, B65D 81/00

(54) **MULTILAYER TRAY WITH DRAINING EFFECT AND RESPECTIVE MANUFACTURING METHOD**
MEHRSCHICHTIGE SCHALE MIT DRAINAGEWIRKUNG UND ZUGEHÖRIGES HERSTELLUNGSVERFAHREN
PLATEAU MULTICOUCHE AVEC EFFET DE DRAINAGE ET PROCÉDÉ DE FABRICATION ASSOCIÉ

(30) Priority: 09.05.2016 IT UA20163247
(43) Date of publication of application: 15.11.2017
(73) Proprietor: Coopbox Group S.P.A., 42100 Reggio Emilia (IT)
(72) Inventor: Lombardi, Andrea, I-42100 Reggio Emilia (IT); Fiordelisi, Fabio, I-42100 Reggio Emilia (IT)
(74) Representative: Maccalli, Marco

(56) References cited:
- EP-A1- 2 910 490
- EP-A2- 1 285 861
- WO-A1-2005/092739
- US-A1- 2004 226 834

## Description

### Field of application

The present invention generally concerns the food packaging field.

In particular, the invention concerns a multilayer tray with a draining effect and its relative production method, as well as a package with a draining effect, that is designed for packaging food products, which are prone to releasing fluids, such as meat or fish, for example.

In the present description and in the following claims, the term "fluid" or "fluids" designates any kind of (exuded) fluid or liquid, that is released by a food product during its preservation period, such as humidity, fat, blood and similar fluids.

### Prior art

It is renown, that food products such as, for example, meat or fish are prone to fluid-release during their preservation periods, even if these are short-lasting.

Prior art has made packages, that are able to drain and/or absorb any fluids released by food products contained in it, available.

Usually, packages that are able to absorb fluids are equipped with a cellulose-fiber based absorbent "pad", which is used in combination with a small tray and a sealing celluloid film, as disclosed for instance in prior art documents EP 1 285 861 A2 and US 2004/226834 A1.

These absorbent pads are made out of several layers, which are usually composed out of different materials and laminated together or paired with adhesive tape.

Even if convenient, the type of packages mentioned above are not without flaws, such as high production costs, due to the creation of the multiplayer pad, the separately produced tray and the pad and dish assembling operations. Furthermore, the material employed for producing the tray is different from the material used for the pad, making it more complex to recycle the assembly.

As an alternative, there have been proposals for open-cell draining trays made out of expanded polystyrene, which are equipped with pores that absorb exuded liquids from the inside. However, currently these trays cannot be produced with materials from recycled sources and therefore appear to not be highly sustainable from an environmental point of view.

WO 2005/092739 A1 discloses a rigid and thermoplastic multilayer tray for food including a first layer of a water-wicking material and a second layer of an absorbent and insulating material which can comprise a foam.

### Summary of the invention

The invention is disclosed in the appended claims.

A primary aim of the present invention is to provide a multilayer tray with a draining effect, which can be easily produced, by using machinery that is traditionally employed for the production of plastic trays, and which can be easily recycled.

A secondary aim of the present invention is to provide a multilayer tray, which can be easily recycled, by using common material for the composing layers and that can also be produced with the use of a starting material that is of the recycled kind.

A third aim of the present invention is to provide a package that allows for both good drainage of exuded liquids, without any necessity for modifying existing packaging machinery, with resultant low manufacturing costs.

A further aim of the present invention is to provide a package that is structurally simple and that is therefore an advantageous alternative to known packages for food products that are prone to release fluids, in particular packages that can be manufactured using the machinery that is known in the field.

These aims are obtained by a multilayer tray with draining effect, in accordance with claim 1 of the present invention.

Furthermore, said aims are obtained through a method for producing such a tray and through a package that is obtained on the basis of this tray and the related manufacturing method.

Further traits and advantages will be highlighted further in the following detailed description of preferred, but non-exclusive embodiment of the present invention, with reference to the enclosed figures, given by way of non-limiting example, which displays shows a schematic cross-section view along a vertical plane of a portion of the multilayer tray with draining effect according to the present invention.

### Detailed description

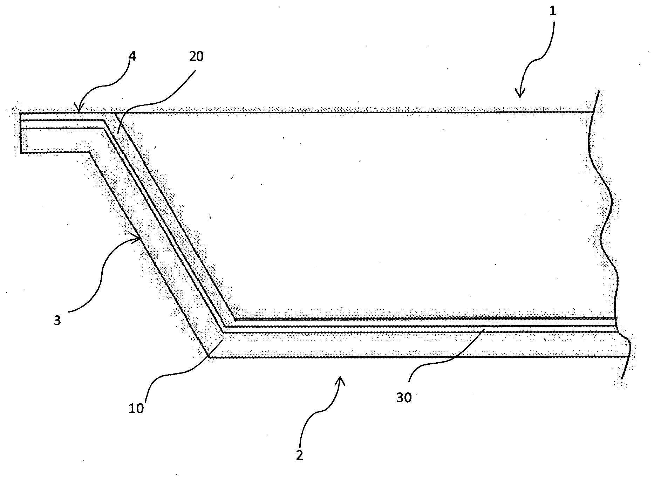

Figure 1 displays a multilayer tray, globally designated as 1, with a base 2, lateral walls 3 and an upper rim 4.

In accordance with the present invention, tray 1 is composed by a first layer of extruded polyester foam (XPET), which is designated as 10 in the figure and by a second layer of polyester fiber fabric, with absorbent capacity, designated as 20 in the figure.

The second layer of PET fiber is able to contain the fluid released by the food product.

Therefore, the first XPET layer will be applied onto the external side of the tray, whereas the second of PET fiber will be applied onto the internal side of the tray, in contact with the food product that is to be contained.

It would be preferable, but not strictly necessary, to also have a third layer of rigid polyester, designated as 30, inserted between the first and the second layer, in order to improve the second layer of PET fiber's adherence to the first layer of XPET.

Furthermore, it is possible to add a perforated PET film, obtained by co-extrusion according to the prior art, such a film is applied by thermo-lamination on the PET fiber fabric on the side, which will be in contact with the food product.

The presence of this perforated PET layer prevents potential undesired passage of fibers onto the food product on one hand and on the other, it improves adhesion through a possible plastic film, with a welding base in PET, which is employed as a seal.

Tray 1 is produced by means of thermoforming on the basis of a multilayer leaf.

This multilayer leaf is produced by means of extrusion and subsequent pairing by means of the layers that compose tray 1, through a calendering process.

Practically, a calender composed of a pair of heated rolls is employed to feed the layers in order to obtain the leaf through pairing.

In the illustrated example, thicknesses of the various layers used for the multilayer leaf with which tray 1 is made, are the following:

| Layer | Thickness |
|---|---|
| First extruded layer(XPET) | 2 - 6 mm |
| Second layer (PET fabric) | 1 - 3 mm |
| Third inserted layer (rigid PET) | 22 - 37 micron |
| Perforated layer (PET) | 8 - 40 micron |

The layer of extruded polyester foam (XPET), has a density that is comprised between 80 and 120 g/l and it is obtained by means of extrusion, through a direct injection of expanding gasses, of the known kind, such as aliphatic hydrocarbons and atmospheric gasses, through an annular extrusion die; this XPET layer is of the closed cell kind.

The layer of polyester fiber fabric has a thickness of 80-500g/m² and is obtained from polyester staple fiber. This layer of polyester fiber fabric is practically a nonwoven fabric, with elevated absorption traits.

Specifically, the PET fiber fabric is a polyester multifilament, with yarn count comprised between 0.1 and 4 dTex, in order to guarantee a high level of micro-porosity.

Preferably, the PET fiber fabric has a quantitative of fiber weight that is comprised between 70 and 100%.

Even more preferably, the fiber is 100% fiber with yarn count comprised between 0.1 and 0.5 dTex.

The formation of the PET fiber fabric is obtained by means of carding, mechanical needle punching and subsequent thermal bonding in an oven, set at a temperature comprised between 170° and 210°.

The rigid PET layer has a thickness comprised between 30 and 50 g/m².

Once the multilayer leaf is obtained, it is wrapped onto a bobbin for storage and subsequently in order to undergo thermoforming at the moment of tray production.

The thermoforming phase is of the known kind in the art, the leaf is pre-heated in an oven at a temperature that is above the glass transition temperature Tg of the polymers of which it is made, in order to subsequently pass on into the mold that produces the trays.

Once the tray is obtained through thermoforming, in accordance with the present invention, the latter is ready to contain a food product that releases fluids, such as meat. The food product will come into direct contact with the perforated PET film, if present, or, in absence of the perforated PET film, it will come into contact with the PET fiber fabric, which will collect exuded liquids, during preservation periods.

In order to preserve the food product, the tray containing the food product is normally sealed with a plastic sealing film, creating a closed package, or, as an alternative, with an extendable plastic film, which envelopes the entire tray.

The layer of PET fiber fabric's ability to contain liquids is elevated. As an example, dry fabric that has a thickness of 140 g/m², will reach a thickness of circa 1300 - 1500 g/m², after a 5 minute immersion into water.

As can be noted by what has been described, the multilayer tray with draining effect for food products, that release exuded liquids, according to the present invention, allows satisfying needs and overcoming the inconveniences that are mentioned in the introductory part of the present description, referring to the prior art.

In fact, the tray that is concerned by this invention allows for containment of exuded liquids from food products, without the need for applying a pad on the inside of the tray and furthermore the base layer (in XPET) and the overhead layer (PET fiber fabric) are produced with the same material, which simplifies recycling operations.

Of course, a person skilled in the art, in order to satisfy contingent and specific needs, may apply numerous modifications and variants, all falling within the scope of protection of the invention as defined by the following claims.

## Claims

1. Multilayer tray (1) with draining effect for containing food products comprising a base (2), lateral walls (3) and an upper rim (4), **characterized in that** said tray with base, lateral walls and upper rim is formed out of a thermoformed multilayer material leaf comprising, in succession from the outside inwards: an outermost layer (10) of extruded polyester foam, particularly extruded polyethylene terephtalate foam, XPET, and a layer (20) of fabric made of polyester fiber, particularly polyethylene terephthalate, PET, fiber, having an absorbent capacity, wherein the layer of extruded polyester foam and the layer of fabric made of polyester fiber are produced with the same material, said layer of fabric made of polyester fiber being either the innermost layer of the multilayer tray or having a perforated polyethylene terephthalate, PET, film applied above it on the side that will be in contact with the food product.

2. Tray according to claim 1 wherein an intermediate layer (30) of rigid polyester, particularly PET, having a binding function is placed between the layer of extruded polyester foam, particularly extruded polyethylene terephtalate foam, XPET, and the layer of fabric made of polyester fiber.

3. Tray according to any one of the preceding claims, wherein the layer of extruded polyester foam, particularly XPET, has a thickness comprised between 2 and 6 mm and the layer of fabric made of polyester fiber has a thickness comprised between 1 and 3 mm.

4. Tray according to any one of the preceding claims 2 and 3, wherein the intermediate layer (30) of rigid polyester, particularly PET, has a thickness comprised between 22 and 37 microns.

5. Tray according to any one of the preceding claims, wherein the layer of fabric made of polyester fiber has a weight for unit area of 80-500g/m² and is made of polyester staple fiber.

6. Tray according to any one of the preceding claims, wherein the layer of fabric made of polyester fiber is a polyester multifilament with a yarn count between 0.1 and 4 dTex.

7. Method for the manufacture of a multilayer tray with draining effect adapted to contain a food product, comprising the steps of:
forming a multilayer leaf by feeding at a calender formed by a pair of heated rollers, the following layers:
- a layer (10) of extruded polyester foam, particularly extruded polyethylene terephtalate foam, XPET, and
- a layer (20) of fabric made of polyester fiber, particularly polyethylene terephthalate, PET, fiber, having an absorbent capacity, wherein the layer of extruded polyester foam and the layer of fabric made of polyester fiber are produced with the same material,
- optionally a layer of perforated PET film placed so as to be in direct contact with the food product,
- optionally an intermediate layer (30) of rigid polyester, particularly PET, having a binding function between the layer (10) of extruded polyester foam, particularly XPET, and the layer (20) of fabric made of polyester fiber,
the obtained multilayer leaf is then thermoformed in a tray by feeding the multilayer leaf to a mold which forms a tray with a base, lateral walls and an upper rim, wherein the innermost layer of the tray is either the layer (20) of fabric made of polyester fiber or, if present, the layer of perforated PET film.

8. Method according to claim 7, wherein the layer (20) of fabric made of polyester fiber, particularly polyethylene terephthalate, PET fiber is obtained by carding, needle punching and thermal bonding of the fibers in an oven at a temperature comprised between 170°C and 210°C.

9. A package with draining effect for a food product susceptible to release fluids, consisting of a tray according to any one of the preceding claims 1 to 6 and comprising a plastic closing film adhering to the entire upper rim of the tray, or a stretchable plastic film enveloping the tray.

## Patentansprüche

1. Mehrschichtige Schale (1) mit Entwässerungswirkung zur Aufnahme von Nahrungsmitteln, die einen Boden (2), Seitenwände (3) und einen oberen Rand (4) aufweist, **dadurch gekennzeichnet, dass** die Schale mit Boden, Seitenwänden und oberem Rand aus einem thermogeformten Mehrschichtmaterialblatt gebildet ist, das nacheinander von außen nach innen aufweist: eine äußerste Schicht (10) aus extrudiertem Polyesterschaum, insbesondere extrudiertem Polyethylenterephthalatschaum, XPET, und eine Schicht (20) aus Gewebe aus Polyesterfaser, insbesondere Polyethylenterephthalat, PET, mit einer Aufnahmekapazität, wobei die Schicht aus extrudiertem Polyesterschaum und die Gewebeschicht aus Polyesterfaser aus demselben Material hergestellt sind, wobei die Gewebeschicht aus Polyesterfaser entweder die innerste Schicht der mehrschichtigen Schale ist oder auf ihr eine perforierte Polyethylenterephthalat, PET-Folie hat, die auf der Seite ausgebildet ist, die mit den Nahrungsmittel in Berührung kommt.

2. Schale nach Anspruch 1, wobei eine Zwischenschicht (30) aus steifem Polyester, insbesondere PET, die eine Bindefunktion hat, zwischen der Schicht aus extrudiertem Polyesterschaum, insbesondere extrudiertem Polyethylenterephthalatschaum, XPET, und der Gewebeschicht aus Polyesterfaser angeordnet ist.

3. Schale nach irgendeinem der vorhergehenden Ansprüche, wobei die Schicht aus extrudiertem Polyesterschaum, insbesondere XPET, eine Dicke zwischen 2 und 6 mm und die Gewebeschicht aus Polyesterfaser eine Dicke zwischen 1 und 3 mm aufweist.

4. Schale nach irgendeinem der vorhergehenden Ansprüche 2 und 3, wobei die Zwischenschicht (30) aus starrem Polyester, insbesondere PET, eine Dicke zwischen 22 und 37 Mikrometer aufweist.

5. Schale nach irgendeinem der vorhergehenden Ansprüche, wobei die Gewebeschicht aus Polyesterfaser ein Flächengewicht von 80 bis 500 g/m² hat und aus Polyesterstapelfaser hergestellt ist.

6. Schale nach irgendeinem der vorhergehenden Ansprüche, wobei die Gewebeschicht aus Polyesterfaser ein Polyestermultifilament mit einer Garnfeinheit zwischen 0,1 und 4 dTex ist.

7. Verfahren zur Herstellung einer mehrschichtigen Schale mit Entwässerungseffekt, die zur Aufnahme eines Nahrungsmittels geeignet ist, weist die folgenden Schritte auf:
Bilden eines mehrschichtigen Blattes durch Zuführen der folgenden Schichten an einem Kalander, der durch ein Paar beheizter Walzen gebildet wird:
- eine Schicht (10) aus extrudiertem Polyesterschaum, insbesondere aus extrudiertem Polyethylenterephthalatschaum, XPET, und
- eine Schicht (20) aus Gewebe aus Polyesterfaser, insbesondere Polyethylenterephthalat, PET, mit einer Aufnahmekapazität, wobei die Schicht aus extrudiertem Polyesterschaum und die Gewebeschicht aus Polyesterfaser aus dem gleichen Material hergestellt sind,
- optional eine Schicht aus perforierter PET-Folie, die so platziert wird, dass sie in direktem Kontakt mit dem Nahrungsmittel steht,
- optional eine Zwischenschicht (30) aus starrem Polyester, insbesondere PET, mit einer Bindefunktion zwischen der Schicht (10) aus extrudiertem Polyesterschaum, insbesondere XPET, und der Schicht (20) aus Gewebe aus Polyesterfaser,
wobei das erhaltene mehrschichtige Blatt dann in einer Schale durch Zuführen des mehrschichtigen Blattes zu einer Form, die eine Schale mit einem Boden, Seitenwänden und einem oberen Rand bildet, thermogeformt wird, wobei die innerste Schicht der Schale entweder die Schicht (20) aus Gewebe aus Polyesterfaser oder, falls vorhanden, die Schicht aus perforierter PET-Folie ist.

8. Verfahren nach Anspruch 7, wobei die Schicht (20) aus Gewebe aus Polyesterfaser, insbesondere Polyethylenterephthalat, PET-Faser durch Kardieren, Vernadeln und thermisches Verbinden der Fasern in einem Ofen bei einer Temperatur zwischen 170°C und 210°C erhalten wird.

9. Verpackung mit Entwässerungswirkung für ein Nahrungsmittel, das Flüssigkeiten freisetzen kann, bestehend aus einer Schale nach einem der vorstehenden Ansprüche 1 bis 6 und die eine am gesamten oberen Rand der Schale haftende Kunststoffverschlussfolie oder eine dehnbare Kunststofffolie, die die Schale umhüllt, aufweist.

## Revendications

1. Plateau multicouche (1) à effet drainant destiné à contenir des produits alimentaires comprenant une base (2), des parois latérales (3) et un rebord supérieur (4), **caractérisé en ce que** ledit plateau avec sa base, ses parois latérales et son rebord supérieur est formé à partir d'une feuille d'un matériau multicouche thermoformé comprenant, successivement depuis l'extérieur vers l'intérieur : une couche la plus externe (10) de mousse de polyester extrudé, en particulier de mousse de téréphtalate de polyéthylène extrudé, XPET, et une couche (20) de tissu constitué de fibre de polyester, en particulier de fibre de téréphtalate de polyéthylène, PET, ayant une capacité absorbante, dans lequel la couche de mousse de polyester extrudé et la couche de tissu constitué de fibre polyester sont produites avec le même matériau, ladite couche de tissu constitué de fibre polyester étant soit la couche la plus interne du plateau multicouche, qoitayant un film de téréphtalate de polyéthylène, PET, perforé appliqué au-dessus du côté qui sera en contact avec le produit alimentaire.

2. Plateau selon la revendication 1, dans lequel une couche intermédiaire (30) de polyester rigide, en particulier du PET, ayant une fonction de liaison est placée entre la couche de mousse de polyester extrudé, en particulier de la mousse de téréphtalate de polyéthylène extrudé, XPET, et la couche de tissu constitué de fibre de polyester.

3. Plateau selon l'une quelconque des revendications précédentes, dans lequel la couche de mousse de polyester extrudé, XPET, a une épaisseur comprise entre 2 et 6 mm et la couche de tissu constitué de fibre de polyester a une épaisseur comprise entre 1 et 3 mm.

4. Plateau selon l'une quelconque des revendications 2 et 3 précédentes, dans lequel la couche intermédiaire (30) de polyester rigide, en particulier du PET, a une épaisseur comprise entre 22 et 37 microns.

5. Plateau selon l'une quelconque des revendications précédentes, dans lequel la couche de tissu constitué de fibre de polyester a un poids pour une surface unitaire de 80-500 g/m² et est constituée de fibre discontinue de polyester.

6. Plateau selon l'une quelconque des revendications précédentes, dans lequel la couche de tissu constitué de fibre de polyester est un multifilament de polyester avec un nombre de fils entre 0,1 et 4 dTex.

7. Procédé de fabrication d'un plateau multicouche à effet drainant adapté pour contenir un produit alimentaire, comprenant les étapes suivantes :
la formation d'une feuille multicouche par l'alimentation d'une calandre formée par une paire de rouleaux chauffants, avec les couches suivantes :
- une couche (10) de mousse de polyester extrudé, en particulier de mousse de téréphtalate de polyéthylène extrudé, XPET, et
- une couche (20) de tissu constitué de fibre de polyester, en particulier de fibre de téréphtalate de polyéthylène, PET, ayant une capacité absorbante, dans lequel la couche de mousse de polyester extrudé et la couche de tissu constitué de fibre polyester sont produites avec le même matériau,
- optionnellement, une couche de film de PET perforé placée de sorte à être en contact direct avec le produit alimentaire,
- optionnellement, une couche intermédiaire (30) de polyester rigide, en particulier du PET, ayant une fonction de liaison entre la couche (10) de mousse de polyester extrudé, en particulier de XPET, et la couche (20) de tissu constitué de fibre de polyester,
la feuille multicouche obtenue est ensuite thermoformée en un plateau en alimentant avec la feuille multicouche un moule qui forme un plateau avec une base, des parois latérales et un rebord supérieur, dans lequel la couche la plus intérieure du plateau est soit la couche (20) de tissu constitué de fibre de polyester soit, si elle est présente, la couche de film de PET perforé.

8. Procédé selon la revendication 7, dans lequel la couche (20) de tissu constitué de fibre de polyester, en particulier de téréphtalate de polyéthylène, PET, est obtenue par cardage, aiguilletage et collage thermique des fibres dans un four à une température comprise entre 170 °C et 210 °C.

9. Emballage ayant un effet drainant pour un produit alimentaire susceptible de libérer des fluides, constitué d'un plateau selon l'une quelconque des revendications 1 à 6 précédentes et comprenant un film de fermeture en plastique adhérant à tout le bord supérieur du plateau, ou un film plastique étirable enveloppant le plateau.
